# EUROPÄISCHE PATENTSCHRIFT

(11) **EP 1 993 397 B1**
(45) Veröffentlichungstag und Bekanntmachung des Hinweises auf die Patenterteilung: **01.12.2010**
(21) Anmeldenummer: 07702754.8
(22) Anmeldetag: 13.01.2007
(51) Int. Cl.: A46B 7/08, F16B 5/04, F16B 19/06

(54) **NIETVERBINDUNG AUF KUNSTSTOFFBASIS**
PLASTIC-BASED RIVET JOINT
ASSEMBLAGE RIVETÉ À BASE DE PLASTIQUE

(30) Priorität: 16.03.2006 DE 102006012043
(43) Veröffentlichungstag der Anmeldung: 26.11.2008
(73) Patentinhaber: Braun GmbH, 61476 Kronberg im Taunus (DE)
(72) Erfinder: AMSEL, Klaus, 61389 Schmitten (DE)
(86) Internationale Anmeldenummer: PCT/EP2007/000282
(87) Internationale Veröffentlichungsnummer: WO 2007/104375

(56) Entgegenhaltungen:
- WO-A-90/09121
- AT-B- 167 764
- FR-E- 92 594
- US-A- 1 890 943
- US-A- 5 499 422

## Beschreibung

Die vorliegende Erfindung betrifft eine Nietverbindung auf Kunststoffbasis mit einem einen Nietbolzen aufweisenden Nietteil und einem Aufnahmeteil.

### Stand der Technik

Aus der FR 1 430 328 A ist eine Nietverbindung gemäß dem Oberbegriff des Anspruchs 1 bekannt.

Aus der AT 167 764 B ist es bekannt, eine Schraubverbindung beweglich zu halten, indem in eine Aufnahmebohrung eine Hülse eingesetzt wird, ein Zwischenteil zur Verringerung der Auflagefläche oder ein Kugellager zur Verringerung der Flächenreibung vorgesehen wird.

Mittels Nietverbindung sind zwei Bauteile durch ein plastisch verformbares, zumeist zylindrisches Verbindungselement, dem Niet, formschlüssig miteinander verbindbar. Haupteinsatzgebiete von Nietverbindungen ist überwiegend das nicht lösbare Verbinden von Metallteilen, wie etwa von Stahlträgern, Flugzeug- oder Schiffsteilen.

Eines der mittels Nietverbindung zu verbindenden Bauteile weist einen zumeist zylindrischen Nietschaft oder Nietkopf auf, der durch ein Nietdurchgangsloch des anderen Bauteils geführt wird. Nach dem Hindurchführen wird der Nietbolzen in die Breite verformt, sodass die beiden Bauteile formschlüssig und unlösbar miteinander verbunden werden.

Bei Nietverbindungen auf Kunststoffbasis, das heißt, bei Verbindungen, bei denen zumindest der plastisch verformbare Nietbolzen aus Kunststoff besteht, kann die zur Bildung der Nietverbindung erforderliche Umformung des Nietbolzens unter Einwirkung von Wärme erreicht werden.

Der z.B. aus einem thermoplastischen Kunststoff gebildete Nietbolzen wird hierbei zum Beispiel mittels einer Heißgasdüse bis zu einem vorgegebenen Schmelzpunkt erhitzt und anschließend mittels eines Kaltstempels in einen Nietkopf umgebildet.

### Problem

Sofern für die beiden mittels Nietverbindung miteinander zu verbindenden Bauteile gleiche Kunststoffarten Verwendung finden, kommt es zu einer stoffschlüssigen Verbindung zwischen dem erwärmten Nietkopf und dem Aufnahmeteil. Auch bei der Verwendung unterschiedlicher Kunststoffe, die im gleichen Temperaturbereich plastisch deformierbar sind, komt es durch das zumindest bereichsweise Aufschmelzen des Niets im Zuge seiner thermoplastischen Verformung auch zu einer stoffschlüssigen Verbindung der Verbindungsteile, die eine relative Verdrehbarkeit oder Beweglichkeit der Verbindungsteile verhindert.

### Aufgabe

Der vorliegenden Erfindung liegt daher die Aufgabe zugrunde, eine verbesserte Nietverbindung auf Kunststoffbasis zur Verfügung zu stellen, bei welcher die miteinander verbundenen Bauteile in der Ebene senkrecht zum Niet gegeneinander beweglich sind.

### Erfindung und vorteilhafte Wirkungen

Das der Erfindung zugrunde liegende Problem wird mittels einer Nietverbindung gemäß Patentanspruch 1 und einem Verfahren zur Bildung einer Nietverbindung gemäß Patentanspruch 6 gelöst. Weitere vorteilhafte Ausführungsformen der Erfindung sind in den Unteransprüchen angegeben.

Die erfindungsgemäße Nietverbindung auf Kunststoffbasis weist zwei Bauteile, ein Nietteil und ein dafür vorgesehenes Aufnahmeteil auf. An dem Nietteil ist ein vorzugsweise zylindrisch ausgebildeter Nietbolzen angeformt, der sich im Wesentlichen senkrecht zur Ebene des Nietteils erstreckt. Das Aufnahmeteil weist ein Nietdurchgangsloch auf, welches für den Nietbolzen vorgesehen ist und eine dementsprechend große Bohrung aufweist. An der vom Nietteil abgewandten Seite des Aufnahmeteils ist eine Gleitschicht angeordnet, die der Bildung einer stoffschlüssigen Verbindung entgegenwirken soll.

Im Zuge der thermoplastischen Verformung des durch das Nietdurchgangsloch hindurchgesteckten Niets wird ein direkter Kontakt des Nietkopfs mit dem Aufnahmeteil verhindert, sodass das vorzugsweise aus dem gleichen Kunststoff wie der Niet gebildete Aufnahmeteil im Bereich seiner dem Nietkopf zugewandten Oberfläche keine stoffschlüssige Verbindung mit dem Nietkopf eingehen kann.

Die Gleitschicht verhindert somit die Bildung einer stoffschlüssigen Verbindung zwischen Aufnahmeteil und Nietteil, sodass die Verbindung der beiden Bauteile im Wesentlichen nur aufgrund des Formschlusses des Nietkopfs mit dem Aufnahmeteil gebildet wird. Je nach Ausbildung des Nietbolzens und des Nietdurchgangslochs bleiben die beiden Bauteile, Nietteil und Aufnahmeteil in der Ebene senkrecht zum Nietschaft relativ zueinander beweglich, vorzugsweise um die durch den Niet gebildete Achse drehbar.

Nach einer ersten Ausführungsform der Erfindung besteht zumindest der Nietbolzen und/oder das Nietteil aus einem thermoplastischen Kunststoff. Die am Aufnahmeteil angeordnete Gleitschicht ist hierbei zumindest im Temperaturbereich der elastischen Deformierbarkeit des Nietbolzens im Wesentlichen hitzebeständig. Demzufolge behält die Gleitschicht auch dann ihre Funktion, wenn sie mit dem erwärmten Nietbolzen oder Nietkopf in direkten Kontakt kommt.

Nach einer weiteren Ausführungsform deckt die Gleitschicht zumindest einen an das Nietdurchgangsloch angrenzenden Randbereich ringartig ab. Die Radialerstreckung der Gleitschicht entspricht hierbei im Wesentlichen der Radialerstreckung des Hinterschnitts des aus dem Nietbolzen formbaren Nietkopfs. Auf diese Art und Weise wird sichergestellt, dass der gesamte Bereich des vom Nietkopf gebildeten Hinterschnitts nicht in eine direkte Anlagestellung mit dem Aufnahmeteil beim Zusammenfügen der Nietverbindung gerät. Die Gleitschicht bildet hierbei eine Trennschicht zwischen dem Hinterschnitt des Nietkopfs und der dem Nietkopf zugewandten Oberfläche des Aufnahmeteils.

Nach einer weiteren Ausführungsform sind das Aufnahmeteil und das Nietteil bei gebildeter Nietverbindung relativ zueinander beweglich. Je nach Ausgestaltung von Nietbolzen und Nietdurchgangsloch, welches zum Beispiel als ein im Wesentlichen kreisförmiges Loch oder aber auch in Form einer länglichen Kulisse ausgebildet sein kann, sind die mittels Nietverbindung miteinander verbundenen Bauteile zum Beispiel gegeneinander verschieblich, zumindest aber gegeneinander verdrehbar ausgebildet. Das relative Verdrehen von Nietteil und Aufnahmeteil erfolgt hierbei vorzugsweise um die durch den Nietbolzen gebildete Achse.

Es ist weiterhin vorgesehen, dass die Nietdurchgangsöffnung als im Wesentlichen runde Bohrung oder als länglicher Schlitz bzw. als längliche Kulisse beispielsweise nach Art eines länglichen Schlitzes ausgebildet ist. Somit kann ein besonders vielseitiger Einsatz der erfindungsgemäßen Nietverbindung, beispielsweise als drehbewegliches Gelenk oder wahlweise als eine ein- oder zweidimensionale Führung realisiert werden. Je nach geometrischer Ausgestaltung der Nietdurchgangsöffnung kann somit möglichst universelles gegenseitiges Verschieben und/oder Verdrehen der miteinander verbundenen Bauteile zur Verfügung gestellt werden.

Nach einer weiteren Ausführungsform ist für die Gleitschicht ein aus Wachs, insbesondere Pfefferminzwachs gebildeter Film vorgesehen. Die dem Nietteil zugewandte Oberfläche des Aufnahmeteils kann sehr einfach mit einem solchen Wachs, vorzugsweise einem dünnen Wachsfilm, überzogen werden. Pfefferminzwachs weist hierbei die für eine thermoplastische Verformung des Niets erforderliche Hitzebeständigkeit auf.

Alternativ kann anstelle eines Wachses auch ein entsprechendes, einen Gleitfilm bildendes Öl Verwendung finden.

Nach einem weiteren unabhängigen Aspekt betrifft die Erfindung ein Verfahren zur Bildung einer auf Kunststoff basierenden Nietverbindung, die zumindest ein Nietteil und ein entsprechendes Aufnahmeteil aufweist. Am Nietteil ist ein Nietbolzen angeformt, der durch ein Nietdurchgangsloch des Aufnahmeteils zur Bildung der Nietverbindung durchgeführt wird. Das Verfahren zur Bildung der erfindungsgemäßen Nietverbindung zeichnet sich dadurch aus, dass vor einer thermoplastischen Umformung des Nietbolzens in einen Nietkopf eine Gleitschicht an der dem Nietkopf zugewandten Seite des Aufnahmeteils angeordnet wird.

Die vorzugsweise aus einem dünnen Gleitfilm bestehende Gleitschicht kann bereits bei der Fertigung des Aufnahmeteils an dieses, bspw. in Form eines Wachsfilms angebracht werden. Alternativ ist auch denkbar, dass die Gleitschicht erst unmittelbar vor einem thermoplastischen Umformprozess des Nietbolzens aufgebracht wird. Letzteres ist zum Beispiel bei der Verwendung von einem Ölfilm als Gleitschicht von Vorteil, der zum Beispiel nach dem Hindurchführen des Nietbolzens durch das Nietdurchgangsloch aufgesprüht werden kann.

Die erfindungsgemäße Nietverbindung auf Kunststoffbasis eignet sich besonders für den Einsatz in auswechselbaren Aufsteckbürstchen für elektrische Zahnbürsten. Sie dient hierbei zur Realisierung einer drehbeweglichen Verbindung eines drehbeweglichen Zahnbürstenkopfs mit einem Zahnbürstenhals. Auf diese Art und Weise wird eine dauerhafte, strapazierfähige und vor allem drehbewegliche Verbindung eines durch einen Elektromotor in Drehbewegung versetzbaren Bürstenkopfs mit einem Bürstenhals realisiert.

Die Erfindung ist nicht nur auf den Einsatz im Bereich von Zahnbürsten beschränkt, sondern kann vielseitig für jegliche Art von Kunststoff-Nietverbindungen universell Verwendung finden.

### Ausführungsbeispiele

Weitere Ziele, Merkmale sowie vorteilhafte Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale in ihrer sinnvollen Kombination den Gegenstand der vorliegenden Erfindung, auch unabhängig von in den Patentansprüchen und deren Rückbeziehung.

Es zeigen:
- Figur 1: eine perspektivische Darstellung der beiden die Nietverbindung bildenden Bauteile,
- Figur 2: einen Querschnitt durch die beiden zusammengefügten Bauteile,
- Figur 3: einen Querschnitt gemäß Figur 2 nach thermoplastischer Umformung des Nietbolzens,
- Figur 4: eine perspektivische Darstellung einer dreh- und verschiebbaren Nietverbin- dung und
- Figur 5: einen Querschnitt durch die beiden Bauteile gemäß Figur 4.

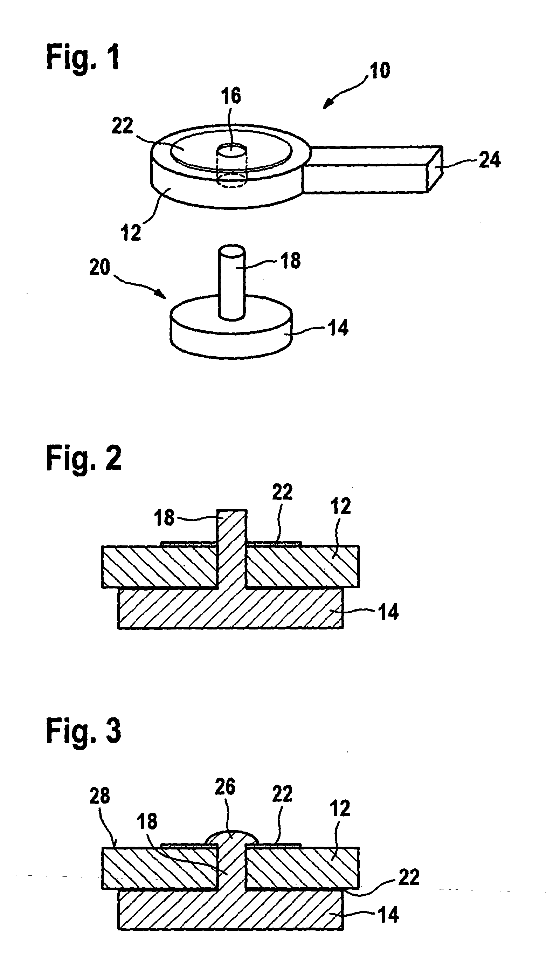

Figur 1 zeigt eine perspektivische Darstellung der beiden miteinander zu verbindenden Bauteile, Aufnahmeteil 10 und Nietteil 20, die, wie in Figur 2 dargestellt, eine drehbewegliche Nietverbindung bilden. Das Nietteil 20 weist einen Sockel 14 auf, an dem sich ein Nietbolzen oder Nietschaft 18 im Wesentlichen senkrecht nach oben erstreckt.

Der Ausgestaltung des Nietbolzens 18 entsprechend weist der Aufnahmering 12 des Aufnahmeteils 10 ein Nietdurchgangsloch 16 auf, in welches der Nietbolzen 18 zur Bildung der Nietverbindung einzuführen ist. Des Weiteren ist an dem Aufnahmering 12 ein Griff oder Schaft 24 angeformt, der beispielsweise einen Zahnbürstenhals repräsentiert. Die Verbindung des Sockels 14 mit weiteren Teilen, wie beispielsweise einem Zahnbürstenkopf, ist hier nicht explizit dargestellt. Es versteht sich jedoch von selbst, dass am Sockel 14 bzw. an dem Nietteil 20 weitere Funktionsteile, wie beispielsweise Zahnbürstenborsten, befestigt sind.

An der Oberseite des ringförmigen Aufnahmeteils 10 ist im Bereich um die Nietdurchgangsöffnung 16 eine Gleitschicht 22 vorgesehen. Diese deckt zumindest einen radialen Bereich um die Nietdurchgangsöffnung 16 ab, der wenigstens der Radialerstreckung des vom Nietkopf 26 gebildeten Hinterschnitts entspricht. Je nach Fertigungsprozess kann die Gleitschicht 22 zum Beispiel als hitzebeständiger Wachs- oder Ölfilm ausgebildet sein. Es ist hierbei insbesondere denkbar, dass die Gleitschicht 22 auch die gesamte Oberseite des ringförmigen Aufnahmeteils 10 überdeckt.

Figur 2 zeigt eine Querschnittsdarstellung von zusammengefügten Aufnahme- und Nietteil 20, 10, wobei der Sockel 14 des Nietteils 20 im Wesentlichen vollständig mit der Unterseite des Aufnahmerings 12 in Anlagestellung gelangt. Der Nietbolzen 18 durchsetzt hierbei das Nietdurchgangsloch 16 des Aufnahmerings 12. In diesem in Figur 2 gezeigten Zwischenstadium sind die beiden Bauteile 12, 14 noch nicht formschlüssig miteinander verbunden.

Erst durch eine thermoplastische Verformung des Niets 18 in einen gemäß Figur 3 dargestellten Nietkopf 26, der gegenüber dem Nietschaft 18 radial verbreitert ist, wird eine formschlüssige Verbindung zwischen den beiden Bauteilen 12, 14 erreicht. Die hitzebeständige Gleitschicht 22, welche an der Oberseite 28 des Aufnahmerings 12 aufliegt, verhindert die Bildung einer stoffschlüssigen Verbindung zwischen der Unterseite des Nietkopfs 26 und dem Aufnahmering 12. Somit wird eine drehbewegliche Verbindung zwischen dem Nietteil 20 und dem Aufnahmeteil 10 geschaffen, die ein relatives Verdrehen oder Verschwenken um eine Achse parallel zum Nietschaft 18 erlaubt.

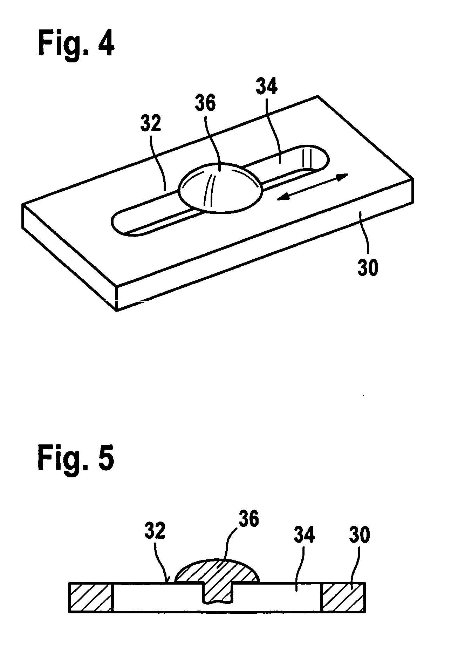

In den Figuren 4 und 5 ist schließlich eine weitere Ausführungsform mit einem länglichen nach Art einer Kulisse ausgebildeten Nietdurchgangsloch 34 am Aufnahmeteil 30 gezeigt. Der Verbindungsmechanismus ist im Wesentlichen identisch mit dem in den zuvor beschriebenen Figuren 1 bis 3. Auch hier ist eine Gleitschicht an der Oberseite des Aufnahmeteils 30 zumindest in einem Randbereich um die Kulisse 34 herum vorgesehen, so dass eine Verschiebbarkeit der beiden miteinander verbundenen Bauteile stets gewährleistet ist. Das den Niet bzw. den Nietkopf aufweisende Sockelbauteil, welches durch die Nietverbindung zumindest in einer Richtung gegen das Aufnahmeteil 30 verschoben werden kann ist in den Figuren 4 und 5 nicht explizit dargestellt.

## Patentansprüche

1. Nietverbindung aus Kunststoff mit einem einen Nietbolzen (18) aufweisenden Nietteil (20) und einem Aufnahmeteil (10), welches eine für den Nietbolzen (18) vorgesehene Nietdurchgangsöffnung (16; 34) aufweist, **dadurch gekennzeichnet, dass** an der vom Nietteil (20) abgewandten Seite des Aufnahmeteils (10) eine Gleitschicht (22) angeordnet ist.

2. Nietverbindung nach Anspruch 1, **dadurch gekennzeichnet, dass** zumindest der Nietbolzen (18) aus einem thermoplastischen Kunststoff besteht, wobei die Gleitschicht (22) zumindest im Temperaturbereich in welchem der Nietbolzen (18) plastisch verformbar ist hitzebeständig ist.

3. Nietverbindung nach einem der vorhergehenden Ansprüche, **dadurch gekennzeichnet, dass** die Gleitschicht (22) zumindest einen an die Nietdurchgangsöffnung (22) angrenzenden Randbereich ringartig abdeckt, wobei die Radialerstreckung der Gleitschicht (22) zumindest der eines Hinterschnitts eines aus dem Nietbolzen (18) formbaren Nietkopfs (26) entspricht.

4. Nietverbindung nach einem oder mehreren der vorhergehenden Ansprüche, **dadurch gekennzeichnet, dass** das Aufnahmeteil (10) und das Nietteil (20) um den Nietbolzen (18) gegeneinander verschwenkbar sind.

5. Nietverbindung nach einem oder mehreren der vorhergehenden Ansprüche, **dadurch gekennzeichnet, dass** Nietdurchgangsöffnung (16; 34) als im Wesentlichen runde Bohrung (16) oder als längliche Kulisse (34) ausgebildet ist.

6. Nietverbindung nach einem oder mehreren der vorhergehenden Ansprüche, **dadurch gekennzeichnet, dass** die Gleitschicht (22) als ein aus Öl oder Wachs, insbesondere Pfefferminzwachs, bestehender Film ausgebildet ist.

7. Verfahren zur Bildung einer ein Nietteil (20) und ein Aufnahmeteil (10) aufweisenden Nietverbindung aus Kunststoff, wobei das Aufnahmeteil (10) eine für einen thermoplastisch verformbaren Nietbolzen (18) des Nietteils (20) vorgesehene Nietdurchgangsöffnung (16; 34) aufweist, **dadurch gekennzeichnet, dass** vor einer Umformung des Nietbolzens (18) in einen Nietkopf (26) eine Gleitschicht (22) an der dem Nietkopf (18) zugewandten Seite des Aufnahmeteils (10) angeordnet wird.

## Claims

1. A riveted joint made of plastic, with a rivet part (20) having a riveted bolt (18) and with a holding part (10) having a rivet through-opening (16, 34) that is provided for the riveted bolt (18),
**characterized in that**
a sliding layer (22) is provided on the side of the holding part (10) facing away from the rivet part (20).

2. The riveted joint according to Claim 1,
**characterized in that**
at least the riveted bolt (18) is made of a thermoplastic material, such that the sliding layer (22) is heat-resistant at least in the temperature range in which the riveted bolt (18) is plastically shapeable.

3. The riveted joint according to any one of the preceding claims,
**characterized in that**
the sliding layer (22) covers at least one edge area adjacent to a rivet through-opening (22) in the manner of a ring, such that the radial extent of the sliding layer (22) corresponds at least to that of an undercut of a rivet head (26) that can be shaped out of the riveted bolt (18).

4. The riveted joint according to any one or more of the preceding claims,
**characterized in that**
the holding part (10) and the rivet part (20) are pivotable relative to one another about the riveted bolt (18).

5. The riveted joint according to any one or more of the preceding claims,
**characterized in that**
the rivet through-opening (16, 34) is designed as an essentially round borehole (16) or as an elongated coulisse (34).

6. The riveted joint according to any one or more of the preceding claims,
**characterized in that**
the sliding layer (22) is designed as a film comprising oil or wax, in particular peppermint wax.

7. The method for forming a riveted joint made of plastic, having a rivet part (20) and a holding part (10), such that the holding part (10) has a rivet through-opening (16, 34), which is provided for a thermoplastically shapeable riveted bolt (18) of the rivet part (20),
**characterized in that**
before shaping of the riveted bolt (18) in a rivet head (6) a sliding layer (22) is arranged on the side of the holding part (10) facing the rivet head (18).

## Revendications

1. Assemblage riveté constitué de plastique, avec une partie de rivet (20) ayant un boulon riveté (18) et avec une partie de maintien (10) ayant une ouverture passante de rivet (16, 34) qui est fournie pour le boulon riveté (18),
**caractérisé en ce que**
une couche coulissante (22) est fournie sur le côté de la partie de maintien (10) tournée à l'écart de la partie de rivet (20).

2. Assemblage riveté selon la revendication 1,
**caractérisé en ce que**
au moins le boulon riveté (18) est constitué d'un matériau thermoplastique, de telle sorte que la couche coulissante (22) est résistante à la chaleur au moins dans l'intervalle de température dans lequel le boulon riveté (18) peut être mis en forme de manière plastique.

3. Assemblage riveté selon l'une quelconque des revendications précédentes,
**caractérisé en ce que**
la couche coulissante (22) couvre au moins une zone de bord adjacente à une ouverture passante de rivet (22) à la manière d'un anneau, de telle sorte que l'étendue radiale de la couche coulissante (22) correspond au moins à celle d'une contre-dépouille d'une tête de rivet (26) qui peut être façonnée du boulon riveté (18).

4. Assemblage riveté selon l'une ou plusieurs des revendications précédentes,
**caractérisé en ce que**
la partie de maintien (10) et la partie de rivet (20) peuvent pivoter l'une par rapport à l'autre autour du boulon riveté (18).

5. Assemblage riveté selon l'une ou plusieurs des revendications précédentes,
**caractérisé en ce que**
l'ouverture passante de rivet (16, 34) est conçue en tant que trou foré pratiquement rond (16) ou en tant que coulisse allongée (34).

6. Assemblage riveté selon l'une ou plusieurs des revendications précédentes,
**caractérisé en ce que**
la couche coulissante (22) est conçue en tant que film comprenant de l'huile ou de la cire, en particulier de la cire de menthe poivrée.

7. Procédé pour former un assemblage riveté constitué de plastique, ayant une partie de rivet (20) et une partie de maintien (10), de telle sorte que la partie de maintien (10) a une ouverture passante de rivet (16, 34), qui est fournie pour un boulon riveté (18) de la partie de rivet (20) pouvant être mis en forme de façon thermoplastique,
**caractérisé en ce que**
avant la mise en forme du boulon riveté (18) dans une tête de rivet (26) une couche coulissante (22) est arrangée sur le côté de la partie de maintien (10) faisant face à la tête de rivet (18).
